# EUROPEAN PATENT APPLICATION

(11) **EP 2 869 048 A1**
(43) Date of publication of application: **06.05.2015**
(21) Application number: 14170734.9
(22) Date of filing: 02.06.2014
(51) Int. Cl.: G01L 3/04, B62M 6/50, G01L 3/10, B62J 99/00

(54) **Torque sensing device**

(30) Priority: 23.10.2013 KR 20130126673
(71) Applicant: Samsung Electro-Mechanics Co., Ltd., Suwon-si, Gyeonggi-do 443-743 (KR)
(72) Inventor: Oh, Myung Geun, 443-743 Gyeonggi-Do (KR); Lee, Geun Ho, 443-743 Gyeonggi-Do (KR); Kim, Se Joo, 443-743 Gyeonggi-Do (KR)
(74) Representative: Heine, Christian Klaus

(57) **Abstract**

Disclosed herein is a torque sensing device, including: a torque measuring part formed on an outer peripheral surface of a pedal shaft of a bicycle; a strain gauge sensing torque of the pedal shaft by a torsion measurement by the torque measuring part; and a connecting part electrically connecting the strain gauge and a controlling part to each other in order to transmit a torque value sensed by the strain gauge to the controlling part.

## Description

### CROSS REFERENCE TO RELATED APPLICATION

This application claims the benefit of Korean Patent Application No. 10-2013-0126673, filed on October 23, 2013, entitled "Torque Sensing Device", which is hereby incorporated by reference in its entirety into this application.

### BACKGROUND OF THE INVENTION

### 1. Technical Field

The present invention relates to a torque sensing device.

### 2. Description of the Related Art

A bicycle is configured so that a front wheel which is a steering wheel and a rear wheel which is a driving wheel are straightly disposed on the front and back of a frame, and a rider works a pedal which is interlocked with the rear wheel to drive the rear wheel, thereby moving forward. The bicycle is installed with a power transmission apparatus such as a chain, a gear, or the like which transmits power generated from the pedal to the rear wheel.

Particularly, a power transmission apparatus of a chain type is composed of a driving sprocket installed on one side of the pedal, a passive sprocket having a diameter smaller than that of the driving sprocket and installed on the rear wheel which is the driving wheel, and a chain connecting the driving sprocket and the passive sprocket to each other.

Therefore, according to the above-mentioned configuration, when the rider works the pedal, the driving sprocket which is integrally installed with the pedal is rotated and the rear wheel connected to the passive sprocket by the chain is rotated, thereby allowing the bicycle to go forward.

The above-mentioned bicycle is driven using pedal effort generated by pedaling of a user. The user has no difficulty in driving the bicycle on a flat land, but needs to use much of his/her power when going up a slope way such as a hill, or the like.

In order to solve the problem, an electric bicycle having a motor mounted therein has been recently developed so as to be driven using driving power from the motor in addition to the pedal effort of the user.

That is, the electric bicycle uses the motor which is driven by a battery. This electric bicycle is configured to be able to select a drive by only power generated by the pedaling of person, a drive by only power of the motor which is driven by the battery, or a drive using both of them.

An electric bicycle according to the prior art has a torque sensor mounted on a pedal shaft to thereby automatically adjust driving power of the motor according to a signal output from the torque sensor when going up the hill.

Examples of the torque sensor include a magnetic type in which when a torsion sensor coil generates a magnetic field according to torsion, an inductor senses the magnetic field and generates a voltage, and a strain gauge type in which a torsion sensor is mounted between the pedal and a crank to measure the torsion.

However, the above-mentioned torque sensor is very expensive. Torque is essentially a measure of sensing torsion of a shaft. Since an amount of torsion is very slight, it is required to precisely amplify the amount of torsion.

In addition, since the shaft is rotated and a controller receiving information is not rotated, information transmission requires many technologies. As a result, the torque sensor is very expensive, thereby increasing price of the electric bicycle.

Further, when the torque sensor is mounted on the bicycle, it occupies much mounting space and a plurality of parts need to be mounted, thereby making installation and maintenance difficult.

In addition, due to weight of the torque sensor, weight of the bicycle is increased, and when the bicycle goes up the slope surface, an assist ratio of the motor is increased, thereby increasing battery consumption.

### [Prior Art Document]

### [Patent Document]

(Patent Document 1) Korean Patent Laid-Open Publication No. 2012-0132593

### SUMMARY OF THE INVENTION

The present invention has been made in an effort to provide a torque sensing device sensing pedal torque of a pedal shaft of an electric bicycle.

According to a preferred embodiment of the present invention, there is provided a torque sensing device, including: a torque measuring part formed on an outer peripheral surface of a pedal shaft of a bicycle; a strain gauge sensing torque of the pedal shaft by a torsion measurement by the torque measuring part; and a connecting part electrically connecting the strain gauge and a controlling part to each other in order to transmit a torque value sensed by the strain gauge to the controlling part.

The torque measuring part may have both sides which are coupled to the pedal shaft and the central side positioned at a distance spaced apart from the pedal shaft.

The torque measuring part may have coupling grooves formed at both sides thereof and corresponding to coupling protrusions formed on the pedal shaft.

The torque sensing device may further include an amplifying part amplifying the torque value measured by the strain gauge.

The amplifying part may be positioned between the strain gauge and the connecting part to transmit the amplified torque value to the connecting part.

The torque sensing device may further include an insulating part positioned on an outer surface of the torque measuring part to insulate between the torque measuring part and the connecting part.

The insulating part may insulate between the torque measuring part and the amplifying part.

The connecting part may include: a slip ring provided along an outer surface of the insulating part; and a brush contacting the slip ring.

The strain gauge may include a lead wire electrically connected to the amplifying part.

Three slip rings may be provided in a ring form along an outer peripheral surface of the insulating part, and the amplifying part may include three connecting wires connected to the three slip rings, respectively.

The insulating part may insulate between the lead wire and the connecting wire, and the pedal shaft.

According to another preferred embodiment of the present invention, there is provided a torque sensing device, including: a strain gauge sensing torque of a pedal shaft of a bicycle; and a connecting part electrically connecting the strain gauge and a controlling part to each other in order to transmit a torque value sensed by the strain gauge to the controlling part.

The torque sensing device may further include an amplifying part amplifying the torque value measured by the strain gauge.

The amplifying part may be positioned between the strain gauge and the connecting part to transmit the amplified torque value to the connecting part.

The torque sensing device may further include an insulating part positioned on an outer surface of the pedal shaft to insulate between the pedal shaft and the connecting part.

The insulating part may insulate between the pedal shaft and the amplifying part.

The connecting part may include: a slip ring provided along an outer surface of the insulating part; and a brush contacting the slip ring.

The strain gauge may include a lead wire electrically connected to the amplifying part.

Three slip rings may be provided in a ring form along an outer peripheral surface of the insulating part, and the amplifying part may include three connecting wires connected to the three slip rings, respectively.

The insulating part may insulate between the lead wire and the connecting wire, and the pedal shaft.

Two strain gauges, two connecting parts, two insulating parts, and two amplifying parts may be provided and may be each positioned at both sides of the pedal shaft.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view showing a torque sensing device according to a preferred embodiment of the present invention;
FIG. 2 is a perspective view of a main component showing the torque sensing device according to the preferred embodiment of the present invention;
FIG. 3 is an illustration view showing the torque sensing device according to the preferred embodiment of the present invention;
FIG. 4 is a perspective view showing a torque measuring part in the torque sensing device according to the preferred embodiment of the present invention;
FIG. 5 is a cut-away perspective view showing the torque measuring part in the torque sensing device according to the preferred embodiment of the present invention; and
FIG. 6 is an illustration view showing a torque sensing device according to another preferred embodiment of the present invention.

### DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, a preferred embodiment of the present invention will be described in detail with reference to the accompanying drawings.

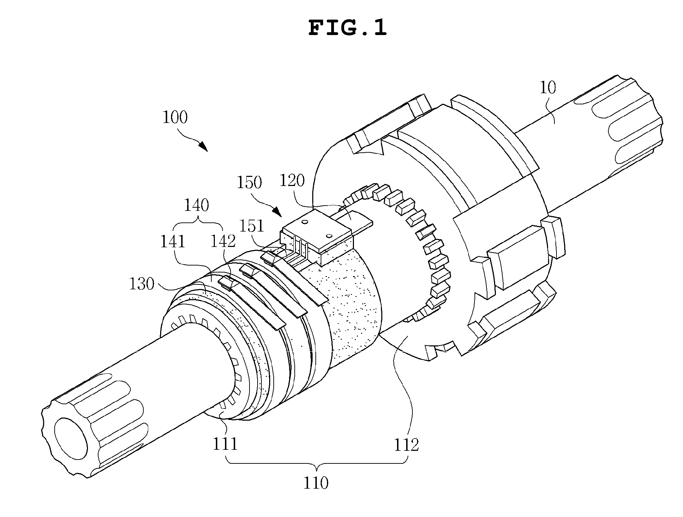

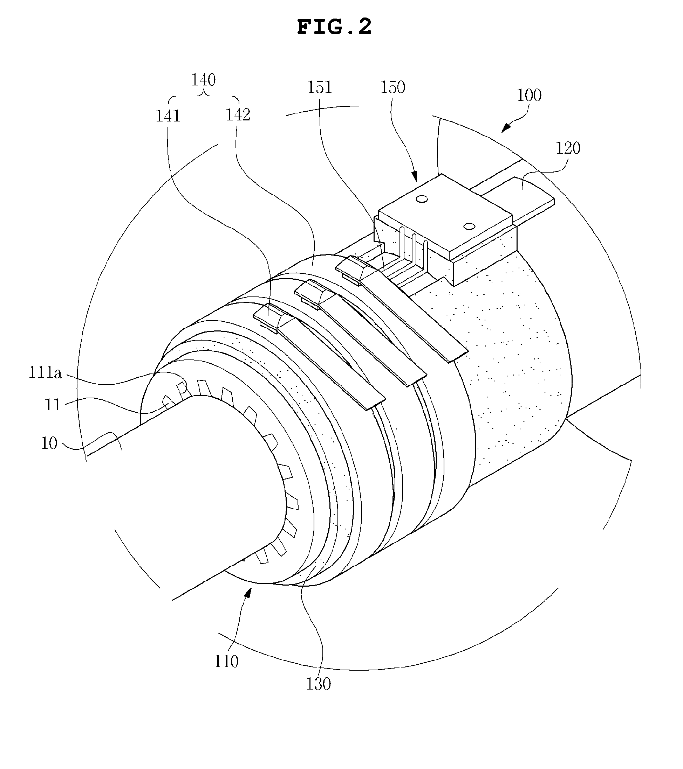

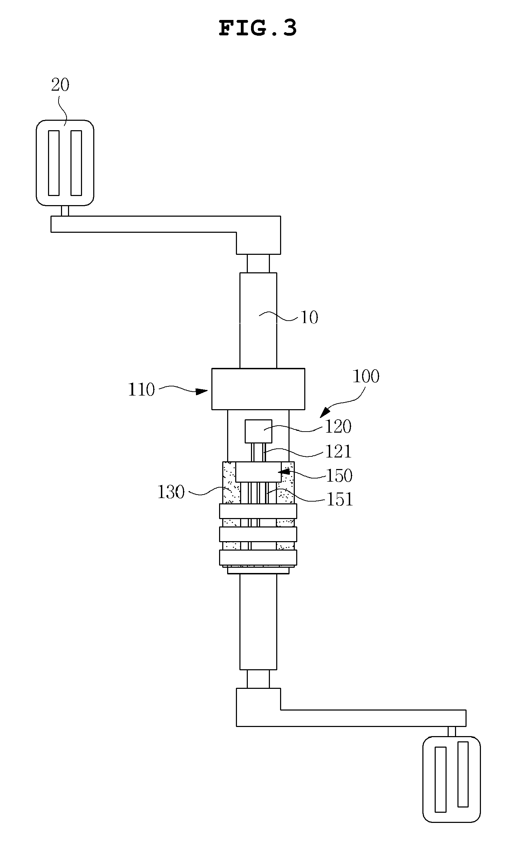

FIG. 1 is a perspective view showing a torque sensing device according to a preferred embodiment of the present invention, FIG. 2 is a perspective view of a main component showing the torque sensing device according to the preferred embodiment of the present invention, and FIG. 3 is an illustration view showing the torque sensing device according to the preferred embodiment of the present invention.

Referring to FIGS. 1 to 3, a torque sensing device 100 according to a preferred embodiment of the present invention is configured to include a torque measuring part 110, a strain gauge 120, and a connecting part 140, thereby sensing torque of a pedal shaft 10. In addition, the torque sensing device 100 according the preferred embodiment of the present invention may further include an amplifying part 150 and an insulating part 130.

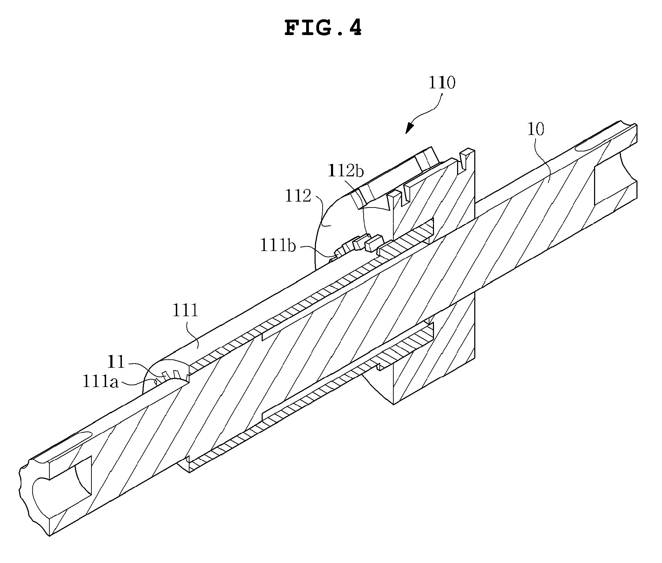

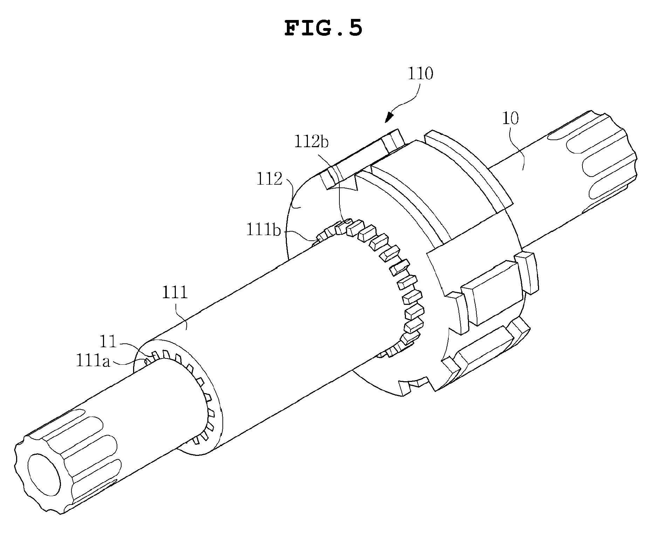

FIG. 4 is a perspective view showing a torque measuring part in the torque sensing device according to the preferred embodiment of the present invention and FIG. 5 is a cut-away perspective view showing the torque measuring part in the torque sensing device according to the preferred embodiment of the present invention.

Referring to FIGS. 4 and 5, the torque measuring part 110 is formed on an outer peripheral surface of the pedal shaft 10 of the bicycle and is provided to easily measure torque.

Here, the torque measuring part 110 has both sides which are coupled to the pedal shaft 10 and the central side positioned at a distance spaced apart from the pedal shaft 10 by a predetermined interval. Therefore, referring to FIGS. 3 and 5, only both sides of the torque measuring part 110 contact the pedal shaft 10, such that torsion of the pedal shaft 10 may be easily measured by the strain gauge 120 measuring a deformation amount. As a result, a torque value of the pedal shaft 10 may be sensed by the measured torsion.

In addition, the torque measuring part 110 has a plurality of coupling protrusions 11 formed on an outer surface of the pedal shaft 10 contacting both sides thereof and coupling grooves 111a formed at both sides of the torque measuring part 110 and corresponding to the coupling protrusions 11 formed on the pedal shaft 10, thereby making it possible to easily measure the torque of the pedal shaft 10.

Further, the torque measuring part 110 is formed in a pair so as to each contact both sides of the pedal shaft 10. In this case, the torque measuring part 110 may be configured to include a first torque measuring part 111 and a second torque measuring part 112, wherein the first torque measuring part 111 may have a plurality of fixed protrusions 111b formed on an outer peripheral surface thereof and the second torque measuring part 112 may be provided with fixed grooves 112b having a form corresponding to the plurality of fixed protrusions 111b.

Referring to FIGS. 1 to 3, the strain gauge 120 senses the torque of the pedal shaft 10 of the bicycle. Here, the strain gauge 120 may measure the torsion of the pedal shaft 10 by measuring the deformation amount of the pedal shaft 10 and sense the torque of the pedal shaft 10 based on the measured torsion. In this case, the strain gauge 120 may be positioned on the outer peripheral surface of the torque measuring part 110 to thereby sense the torque of the pedal shaft 10 by the torque measuring part 110. Here, the pedal shaft 10 has pedals 20 provided at both sides thereof. When a user works the pedals 20, the strain gauge 120 senses the torque acting on the pedal shaft 10, such that force in which the user works the pedals 20 may be estimated.

In addition, the strain gauge 120 may include a lead wire 121 electrically connected to the amplifying part 150 or the connecting part 140 so as to transmit the torque sensed value.

The amplifying part 150 may amplify the torque value sensed by the strain gauge 120. Here, the amplifying part 150 may include a connecting wire 151 electrically connected to the connecting part 140 so as to transmit the amplified torque value. In this case, three connecting wires 151 may be provided.

The insulating part 130 is positioned on the outer surface of the pedal shaft 10 to thereby electrically insulate between the pedal shaft 10 and the connecting part 140. In addition, the insulating part 130 may insulate between the pedal shaft 10 and the amplifying part 150. Further, the insulating part 130 may insulate between the lead wire 121 of the strain gauge 120 and the connecting wire 151 of the amplifying part 150, and the pedal shaft 10, but the present invention is not limited thereto.

The connecting part 140 may provide a connection part electrically connecting the strain gauge 120 and a controlling part (not shown) to each other so that the torque value sensed by the strain gauge 120 may be transmitted to the controlling part.

In addition, the connecting part 140 may include a slip ring 141 provided along an outer surface of the insulating part 130 and a brush 142 contacting the slip ring 141. In addition, the slip ring 141 may be provided in a circular form along an outer peripheral surface of the insulating part 130.

Here, the slip ring 141 is rotated and the brush 142 is fixed. In this case, one side of the brush 142 contacts an outer surface of the slip ring 141 which is co-rotated at the time of the rotation of the petal shaft 10, and the other side thereof is electrically connected to the controlling part.

Further, three slip rings 141 may be provided so as to be disposed at a predetermined interval along a length direction of the pedal shaft 10. In this case, the three slip rings 141 may be each electrically connected to the three connecting wires 151 of the amplifying part 150.

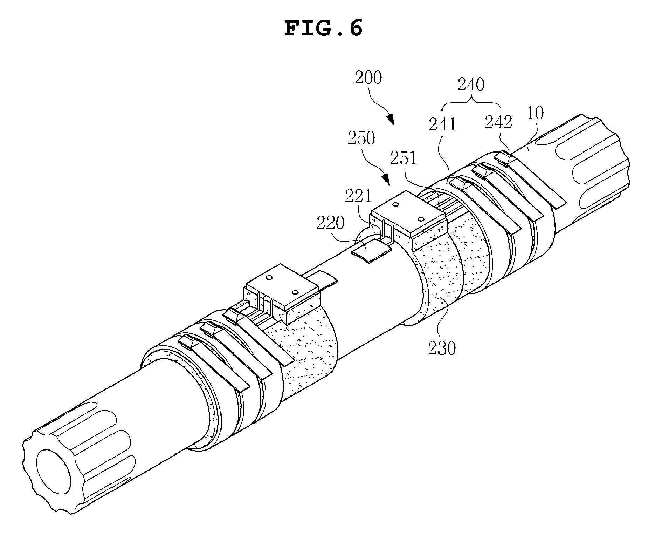

FIG. 6 is an illustration view showing a torque sensing device according to another preferred embodiment of the present invention.

Referring to FIG. 6, a torque sensing device 200 according to another preferred embodiment of the present invention is configured to include a strain gauge 220 and a connecting part 240, thereby sensing torque of the pedal shaft 10. Here, the torque sensing device 200 according to another preferred embodiment of the present invention has a configuration that the torque measuring part 110 is omitted from the torque sensing device 100 according to a preferred embodiment of the present invention.

Referring to FIG. 6, the strain gauge 220 senses a torque of the pedal shaft 10 of the bicycle. Here, the strain gauge 220 may measure torsion of the pedal shaft 10 by measuring a deformation amount of the pedal shaft 10 and sense the torque of the pedal shaft 10 based on the measured torsion.

In addition, the strain gauge 220 may include a lead wire 221 electrically connected to an amplifying part 250 or the connecting part 240 so as to transmit the torque sensed value.

The amplifying part 250 may amplify the torque value sensed by the strain gauge 220. Here, the amplifying part 250 may include a connecting wire 251 electrically connected to the connecting part 240 so as to transmit the amplified torque value. In this case, three connecting wires 251 may be provided.

An insulating part 230 is positioned on an outer surface of the pedal shaft 10 to thereby electrically insulate between the pedal shaft 10 and the connecting part 240. In addition, the insulating part 230 may insulate between the pedal shaft 10 and the amplifying part 250. Further, the insulating part 230 may insulate between the lead wire 221 of the strain gauge 220 and the connecting wire 251 of the amplifying part 250, and the pedal shaft 10, but the present invention is not limited thereto.

The connecting part 240 may provide a connection part electrically connecting the strain gauge 220 and a controlling part to each other so that the torque value sensed by the strain gauge 220 may be transmitted to the controlling part.

In addition, the connecting part 240 may include a slip ring 241 provided along an outer surface of the insulating part 230 and a brush 242 contacting the slip ring 241. In this case, the slip ring 241 may be provided in a circular form along an outer peripheral surface of the insulating part 230.

Further, three slip rings 241 may be provided so as to be disposed at a predetermined interval along a length direction of the pedal shaft 10. In this case, the three slip rings 241 may be each electrically connected to the three connecting wires 251 of the amplifying part 250.

Meanwhile, in the torque sensing device 200 according to another preferred embodiment of the present invention, the strain gauge 220, the connecting part 240, and the insulating part 230, and the amplifying part 250 may be provided in a pair so as to be each positioned at both sides of the pedal shaft 10. Therefore, the torque of the pedal shaft 10 may be more precisely measured.

According to the preferred embodiment of the present invention, the use of the expensive torque sensor may be replaced by sensing the pedal torque of the pedal shaft using the strain gauge, thereby making it possible to decrease use cost.

Therefore, the cost may be significantly decreased and the space occupied by the torque sensor may be decreased.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. A torque sensing device, comprising:
a torque measuring part formed on an outer peripheral surface of a pedal shaft of a bicycle;
a strain gauge sensing torque of the pedal shaft by a torsion measurement by the torque measuring part; and
a connecting part electrically connecting the strain gauge and a controlling part to each other in order to transmit a torque value sensed by the strain gauge to the controlling part.

2. The torque sensing device as set forth in claim 1, wherein the torque measuring part has both sides which are coupled to the pedal shaft and the central side positioned at a distance spaced apart from the pedal shaft.

3. The torque sensing device as set forth in claim 1, wherein the torque measuring part has coupling grooves formed at both sides thereof and corresponding to coupling protrusions formed on the pedal shaft.

4. The torque sensing device as set forth in claim 1, further comprising an amplifying part amplifying the torque value measured by the strain gauge.

5. The torque sensing device as set forth in claim 4, wherein the amplifying part is positioned between the strain gauge and the connecting part to transmit the amplified torque value to the connecting part.

6. The torque sensing device as set forth in claim 5, further comprising an insulating part positioned on an outer surface of the torque measuring part to insulate between the torque measuring part and the connecting part.

7. The torque sensing device as set forth in claim 6, wherein the insulating part insulates between the torque measuring part and the amplifying part.

8. The torque sensing device as set forth in claim 6, wherein the connecting part includes:
a slip ring provided along an outer surface of the insulating part; and
a brush contacting the slip ring.

9. The torque sensing device as set forth in claim 8, wherein the strain gauge includes a lead wire electrically connected to the amplifying part.

10. The torque sensing device as set forth in claim 9, wherein three slip rings are provided in a ring form along an outer peripheral surface of the insulating part, and
the amplifying part includes three connecting wires connected to the three slip rings, respectively.

11. A torque sensing device, comprising:
a strain gauge sensing torque of a pedal shaft of a bicycle; and
a connecting part electrically connecting the strain gauge and a controlling part to each other in order to transmit a torque value sensed by the strain gauge to the controlling part.

12. The torque sensing device as set forth in claim 11, further comprising an amplifying part amplifying the torque value measured by the strain gauge.

13. The torque sensing device as set forth in claim 12, wherein the amplifying part is positioned between the strain gauge and the connecting part to transmit the amplified torque value to the connecting part.

14. The torque sensing device as set forth in claim 12, further comprising an insulating part positioned on an outer surface of the pedal shaft to insulate between the pedal shaft and the connecting part.

15. The torque sensing device as set forth in claim 14, wherein the insulating part insulates between the pedal shaft and the amplifying part.

16. The torque sensing device as set forth in claim 14, wherein the connecting part includes:
a slip ring provided along an outer surface of the insulating part; and
a brush contacting the slip ring.

17. The torque sensing device as set forth in claim 16, wherein the strain gauge includes a lead wire electrically connected to the amplifying part.

18. The torque sensing device as set forth in claim 17, wherein three slip rings are provided in a ring form along an outer peripheral surface of the insulating part, and
the amplifying part includes three connecting wires connected to the three slip rings, respectively.

19. The torque sensing device as set forth in claim 18, wherein two strain gauges, two connecting parts, two insulating parts, and two amplifying parts are provided and are each positioned at both sides of the pedal shaft.
